# EUROPÄISCHE PATENTSCHRIFT

(11) **EP 2 355 279 B1**
(45) Veröffentlichungstag und Bekanntmachung des Hinweises auf die Patenterteilung: **17.02.2016**
(21) Anmeldenummer: 10003072.5
(22) Anmeldetag: 23.03.2010
(51) Int. Cl.: H02G 15/013, H01R 43/00

(54) **Verfahren und Vorrichtung zur verwendung bei der montage eines elastischen dichtungselements auf einem elektrischen Leiter**
Method for sheathing an electrical wire with an elastic sealing element
Procédé d'enrobage d'un conducteur électrique doté d'un élément d'étanchéification élastique

(30) Priorität: 04.02.2010 EP 10001148
(43) Veröffentlichungstag der Anmeldung: 10.08.2011
(73) Patentinhaber: Delphi Technologies, Inc., Troy MI 48007 (US)
(72) Erfinder: Urbaniak, Andreas, 48153 Münster (DE); Eder, Bernd, 42287 Wuppertal (DE)
(74) Vertreter: Allart, René Paul Pruli Slamet

(56) Entgegenhaltungen:
- FR-A1- 2 436 319
- JP-A- 5 299 149
- JP-A- 04 104 488
- JP-A- 05 266 959
- JP-A- 10 271 638

## Beschreibung

Die vorliegende Erfindung betrifft eine Vorrichtung zur Verwendung bei der Montage eines elastischen Dichtungselements auf einem elektrischen Leiter gemäß dem Oberbegriff des Anspruchs 1 wie sie aus der JP 05299149 bekannt geworden ist. Außerdem betrifft die Erfindung ein Verfahren zum Ummanteln eines elektrischen Leiters mit einem elastischen Dichtungselement gemäß dem Oberbegriff des Anspruchs 9, wie es beispielsweise aus der FR 2 436 319 A1 bekannt gewerden ist, sowie solch ein elastisches Dichtungselement.

In der Kraftfahrzeugindustrie werden kontinuierlich Anstrengungen unternommen, um das Fahrzeuggewicht zugunsten der Kraftstoffwirtschaftlichkeit zu reduzieren. Da in Kraftfahrzeugen üblicherweise nicht unerhebliche Mengen an elektrischen Leitern sowie an aus elektrischen Leitern zusammengesetzten Kabelsätzen verlegt sind, ist die Kraftfahrzeugindustrie auch um eine Gewichtsreduzierung der Kabelsätze bemüht, weshalb die Kupferquerschnitte der Leiter bis auf Werte zwischen ca. 0,13 mm² und ca. 0,08 mm² verkleinert werden, so dass der Durchmesser an der Außenfläche der Isolierung dieser elektrischen Leiter mit reduzierter Querschnittsfläche nur noch etwa 0,8 mm beträgt.

Dies erweist sich jedoch dahingehend als problematisch, dass sich derartige elektrische Leiter mit reduziertem Außendurchmesser nicht mehr in herkömmlicher Art und Weise mit einem elastischen Dichtungselement ummanteln lassen, welches während seiner Herstellung mittels eines Spritzgießverfahrens bereits mit einer Durchdringung zur Aufnahme eines elektrischen Leiters als Hohlelement hergestellt wurde, wie es in der JP 05-299149 A oder in der JP 04-104488 A beschrieben wird. So ist nämlich mit einem Innendurchmesser von etwa 0,65 bis 0,8 mm die Fertigungsgrenze von derartigen ein Dichtungselement durchsetzenden Durchdringungen erreicht, was zur Folge hat, dass die Kontraktions- bzw. Kompressionskraft, die von dem Dichtungselement auf ein in ihre Durchdringung eingeführten elektrischen Leiter ausgeübt wird, nicht immer ausreicht, um einen hinreichend dichten Abschluss zu gewährleisten.

Der Erfindung liegt daher die Aufgabe zugrunde, eine Vorrichtung und ein Verfahren anzugeben, mit denen ein hinreichend dichter Abschluss zwischen dem elektrischen Leiter und dem Dichtungselement auch bei sehr dünnen elektrischen Leitern gewährleistet werden kann.

Diese Aufgabe wird gemäß einem Aspekt mit dem Verfahren gemäß Anspruch 9 zum Ummanteln eines elektrischen Leiters mit einem elastischen Dichtungselement gelöst.

Gemäß dem erfindungsgemäßen Verfahren wird in dem Dichtungselement zunächst eine Durchdringung mit einem ersten Äquivalentdurchmesser erzeugt, welche sich im Wesentlichen linear durch das Dichtungselement hindurch erstreckt. Bei dieser Durchdringung handelt es sich um einen räumlichen Schnitt oder eine Penetration, dessen bzw. deren Äquivalentdurchmesser vorzugsweise kleiner als 0,1 mm ist. Die auf diese Weise mit einem ersten Äquivalentdurchmesser erzeugte Durchdringung wird dann elastisch auf einen zweiten Äquivalentdurchmesser aufgeweitet bzw. gedehnt, welcher geringfügig größer als der jeweilige elektrische Leiter ist, den es mit dem elastischen Dichtungselement zu ummanteln gilt. So sollte der zweite Äquivalentdurchmesser beispielsweise in der Größenordnung von ca. 1 mm oder mehr liegen, wenn der elektrische Leiter einen Außendurchmesser von 0,8 mm aufweist.

Nachdem auf diese Weise die Durchdringung auf den zweiten Äquivalentdurchmesser aufgeweitet wurde, kann anschließend ein elektrischer Leiter in die auf den zweiten Äquivalentdurchmesser aufgeweitete Durchdringung eingeführt werden, so dass sich der elektrische Leiter vollständig durch das Dichtungselement hindurch erstreckt. Um nun einen hinreichend dichten Abschluss zwischen dem elektrischen Leiter und dem Dichtungselement zu erzeugen, wird anschließend bewirkt, dass sich die auf den zweiten Äquivalentdurchmesser aufgeweitete Durchdringung zusammenzieht bzw. kontrahiert, wodurch ein dichter Abschluss zwischen dem elektrischen Leiter und dem elastischen Dichtungselement sichergestellt werden kann.

Da sich die Durchdringungen in dem Dichtungselement nicht immer kreisrund herstellen lassen, wird hier als Vergleichsgröße nicht der Durchmesser sondern der Äquivalentdurchmesser verwendet; er entspricht dabei dem Durchmesser einer kreisrunden Durchdringung, deren Innenumfang dem Innenumfang der jeweils betrachteten Durchdringung entspricht. Ebenfalls kann als Vergleichsgröße die Querschnittsfläche herangezogen werden, so dass der Äquivalentdurchmesser dem Durchmesser einer kreisrunden Durchdringung entspricht, deren Querschnittsfläche der Querschnittsfläche der jeweils betrachteten Durchdringung entspricht.

Die Durchdringung ersten Äquivalentdurchmessers kann in dem Dichtungselement beispielsweise erzeugt werden, indem dasselbe mit einem Flüssigkeits- oder Gasstrahl bzw. allgemein mit einem Düsenstrahl beaufschlagt wird, der die gewünschte Durchdringung in das Dichtungselement mit einem ersten Äquivalentdurchmesser schneidet. Die so erzeugte Durchdringung kann dann beispielsweise mechanisch oder thermisch beispielsweise durch Wärmebeaufschlagung des Dichtungselements auf den zweiten Äquivalentdurchmesser aufgeweitet werden, so dass nach Einführen eines elektrischen Leiters in die so aufgeweitete Durchdringung beispielsweise durch Abkühlen des elastischen Dichtungselements bewirkt werden kann, dass sich dieses bzw. die aufgeweitete Durchdringung in der gewünschten Weise zusammenzieht.

Zwar kann das erfindungsgemäße Verfahren in der zuvor erläuterten Weise unter Verwendung eines Düsenstrahls sowie mechanischer und/oder thermischer Einwirkung auf das elastische Dichtungselement durchgeführt werden; vorteilhafte Ausführungsformen des erfindungsgemäßen Verfahrens ergeben sich jedoch aus der folgenden Beschreibung, den Zeichnungen und insbesondere aus den Unteransprüchen.

So ist gemäß einer Ausführungsform vorgesehen, dass die Durchdringung ersten Äquivalentdurchmessers in dem Dichtungselement erzeugt wird, indem dieses mit einem spitzen, dünnen und vorzugsweise runden Gegenstand wie beispielsweise einer Stechnadel durchstoßen wird, deren Schaftdurchmesser dem ersten Äquivalentdurchmesser entspricht. Die auf diese Weise erzeugte Durchdringungen ersten Äquivalentdurchmessers kann dann beispielsweise in der zuvor erläuterten Art und Weise durch mechanische und/oder thermische Einwirkung auf das elastische Dichtungselement auf den zweiten Äquivalentdurchmesser aufgeweitet werden.

Gemäß einer weiteren Ausführungsform ist es vorgesehen, die mit Hilfe eines Düsenstrahls oder einer Stechnadel erzeugte Durchdringung ersten Äquivalentdurchmessers auf den zweiten Äquivalentdurchmesser aufzuweiten, indem eine Hohlnadel durch die mit dem ersten Äquivalentdurchmesser erzeugte Durchdringung hindurchgeführt wird, deren Schaftdurchmesser dem zweiten Äquivalentdurchmesser entspricht. Das Aufweiten der Durchdringung ersten Äquivalentdurchmessers auf den zweiten Äquivalentdurchmesser mit Hilfe einer Hohlnadel erweist sich dabei dahingehend als vorteilhaft, dass dadurch das Einführen des elektrischen Leiters in die Durchdringung erleichtert wird, indem diese in die Hohlnadel selbst eingeschoben wird.

Nach einer weiteren Ausführungsform kann vorgesehen werden, den elektrischen Leiter in die auf den zweiten Äquivalentdurchmesser aufgeweitete Durchdringung einzuführen, indem der elektrische Leiter in die Hohlnadel eingeführt wird und danach die Hohlnadel aus dem Dichtungselement herausgezogen wird, so dass der elektrische Leiter in der sich aufgrund der Elastizität des Dichtungselements dann von selbst kontrahierenden Durchdringung verbleibt. Dadurch, dass die Durchdringung ersten Äquivalentdurchmessers mit einem Äquivalentdurchmesser erzeugt wurde, der kleiner als der Außendurchmesser der elektrischen Leitung ist, kann somit ein dichter Abschluss zwischen dem elektrischen Leiter und dem elastischen Dichtungselement sichergestellt werden. Aufgrund der Elastizität des Werkstoffs, aus dem das Dichtungselement hergestellt ist, besitzt nämlich die Durchdringung die Tendenz, sich nach dem Entfernen der Hohlnadel wieder zusammenzuziehen, wodurch auf den elektrischen Leiter eine Kompressionskraft ausgeübt wird, durch die nicht nur ein dichter Abschluss gegenüber dem Dichtungselement erzeugt sondern der elektrische Leiter auch reibschlüssig in dem Dichtungselement gehalten wird. Mit anderen Worten wird also durch das Herausziehen der Hohlnadel aus dem Dichtungselement in der gewünschten Weise das Kontrahieren der auf den zweiten Äquivalentdurchmesser aufgeweiteten Durchdringung bewirkt, um den elektrischen Leiter gegenüber dem elastischen Dichtungselement abzudichten.

Um zu verhindern, dass durch die scharfe Vorderkante an der Spitze der Hohlnadel Material am Innenumfang der Durchdringung abgetragen wird, wenn die Hohlnadel in die Durchdringung ersten Äquivalentdurchmessers eingeführt wird, ist es gemäß einer weiteren Ausführungsform vorgesehen, die Hohlnadel durch die mit dem ersten Äquivalentdurchmesser erzeugte Durchdringung hindurchzuführen, indem die Hohlnadel auf die in dem Dichtungskörper noch befindliche Stechnadel aufgefädelt und darauf aufgeschoben wird. Die Durchdringung ersten Durchmessers hat somit nicht die Möglichkeit, sich vor dem Einführen der Hohlnadel in den Dichtungskörper auf einen Durchmesser zusammenzuziehen, der kleiner als der erste Äquivalentdurchmesser ist, wodurch beim Einführen der Hohlnadel in die Durchdringung insbesondere dann kein Material vom Innenumfang der Durchdringung abgetragen wird, wenn der Innendurchmesser der Hohlnadel im Wesentlichen dem Außendurchmesser der Stechnadel entspricht.

Zwar kann der elektrische Leiter in die Hohlnadel eingeführt werden, nachdem die Stechnadel aus der Hohlnadel gezogen wurde. Da der elektrische Leiter aufgrund seines sehr kleinen Durchmessers jedoch eine gewisse Knickgefährdung aufweist, kann es sich als vorteilhaft erweisen, den elektrischen Leiter schon in die Hohlnadel einzuführen, während die Stechnadel aus der Hohlnadel gezogen wird. So kann nämlich beispielsweise der elektrische Leiter an der Spitze der durch den Dichtungskörper hindurch gestochenen Stechnadel befestigt werden, so dass der elektrische Leiter dadurch in die Hohlnadel eingezogen wird, dass die Stechnadel aus der Hohlnadel gezogen wird. Der elektrische Leiter wird somit in derselben Richtung in die Hohlnadel eingeführt, in der die Stechnadel aus der Hohlnadel gezogen wird.

In fertigungstechnischer Hinsicht kann es sich jedoch ebenfalls als vorteilhaft erweisen, den elektrischen Leiter in derselben Richtung in die Höhlnadel einzuführen, in der die Stechnadel in die Hohlnadel eingeführt wird. In diesem Falle sind nämlich etwaige Apparaturen und Einführhilfen zum Einführen des elektrischen Leiters und der Stechnadel in die Hohlnadel nur auf einer Seite des Dichtungselements vorzusehen, wodurch diesen Apparaturen und Einführhilfen eine Doppelfunktion zugewiesen werden kann.

Wie bereits zuvor angedeutet wurde, sollte das Erzeugen der Durchdringung ersten Äquivalentdurchmessers und/oder das Aufweiten der mit einem ersten Äquivalentdurchmesser erzeugten Durchdringung auf einen zweiten Äquivalentdurchmesser nicht-spanend bzw. zerspanungsfrei erfolgen, damit ein möglichst dichter Abschluss zwischen dem elektrischem Leiter und dem Dichtungselement infolge des Kontrahierens der Durchdringung nach erfolgtem Entfernen der Hohlnadel aus dem Dichtungselement sichergestellt werden kann. Würde hingegen beim Erzeugen oder Aufweiten der Durchdringung Material entlang des Innenumfangs der Durchdringung entfernt werden, so bestünde die Gefahr, dass an der Stelle des Materialabtrags nach dem Herausziehen der Hohlnadel aus dem Dichtungselement ein klaffender Spalt zwischen dem Dichtungselement und dem elektrischen Leiter verbleibt, so dass dort kein dichter Abschluss gewährleistet ist.

Obwohl das Erzeugen der Durchdringung ersten Äquivalentdurchmessers und das Aufweiten derselben auf einen zweiten Äquivalentdurchmesser in der zuvor beschriebenen Art und Weise in zwei aufeinander folgenden Schritten erfolgen kann, kann es sich in fertigungstechnischer Hinsicht als vorteilhaft erweisen, diese beiden Schritte unmittelbar im Anschluss aneinander bzw. mit fließendem Übergang ineinander durchzuführen, indem die Stechnadel zusammen mit der auf sie aufgeschobenen Hohlnadel in das Dichtungselement gestochen wird. Insbesondere dann, wenn sich dabei die Spitze der Hohlnadel kontinuierlich in der Spitze der Stechnadel fortsetzt, weist die Durchdringung während ihres Aufweitens bis auf den zweiten Äquivalentdurchmesser nur für eine sehr kurze Zeitdauer den ersten Äquivalentdurchmesser auf, so dass auch bei dieser Ausführungsform - wenn auch nur für eine sehr kurze Zeitdauer - zunächst eine Durchdringung ersten Äquivalentdurchmessers erzeugt wird, welche dann sofort weiter aufgeweitet wird.

Um kein bzw. möglichst wenig Material beim Einführen der Hohlnadel in die Durchdringung ersten Äquivalentdurchmessers vom Innenumfang der Durchdringung abzutragen, ist die Hohlnadel gemäß einer noch weiteren Ausführungsform mit einer kegelstumpfförmigen Spitze ausgebildet, welche sich von einem dem zweiten Äquivalentdurchmesser entsprechenden Durchmesser am Nadelschaft zu einem dem ersten Äquivalentdurchmesser entsprechenden Durchmesser an der Nadelspitze verjüngt. Die Hohlnadel liegt somit mit ihrer Nadelspitze beim Aufschieben auf die Stechnadel dicht an derselben an, wodurch kein oder zumindest annähernd kein Material entlang dem Innenumfang der Durchdringung ersten Äquivalentdurchmessers abgetragen wird, wenn die Hohlnadel in die Durchdringung hinein geschoben wird.

Gemäß einem weiteren Aspekt wird die der Erfindung zu Grunde liegende Aufgabe auch mit einer Vorrichtung gelöst, die die Merkmale des Anspruchs 1 aufweist. Die erfindungsgemäße Vorrichtung ist zur Verwendung bei dem erfindungsgemäßen Verfahren geeignet; dementsprechend lassen sich die zuvor unter Bezugnahme auf das erfindungsgemäße Verfahren erläuterten Merkmale, insbesondere jene, die die gegenständliche Ausbildung der Stechnadel und der Hohlnadel betreffen, auf die Ausgestaltung der im folgenden beschriebenen Vorrichtung übertragen.

Die erfindungsgemäße Vorrichtung ist speziell zur Verwendung bei der Montage eines elastischen Dichtungselements auf einem elektrischen Leiter ausgebildet, und dient dazu, in dem Dichtungselement zunächst eine Durchdringung zu erzeugen, die dann aufgeweitet wird, so dass anschließend in diese aufgeweitete Durchdringung in der bereits zuvor erläuterten Art und Weise ein elektrischer Leiter eingeführt und bewirkt werden kann, dass sich die aufgeweitete Durchdringung zusammenzieht bzw. kontrahiert. Auf diese Weise kann ein dichter Abschluss zwischen dem elektrischen Leiter und dem elastischen Dichtungselement sichergestellt werden.

Die erfindungsgemäße Vorrichtung verfügt hierzu über einen in funktioneller Hinsicht der bereits zuvor erwähnten Hohlnadel entsprechenden ersten Stift, der zur Ausführung einer Hubbewegung veranlasst werden kann, wobei am vorderen Ende dieses ersten Stifts eine Schneidspitze ausgebildet ist, die beim Hindurchdringen durch ein in Hubrichtung vor der Schneidspitze positioniertes und als Vollkörper ausgebildetes Dichtungselement in demselben eine Durchdringung in Form eines räumlichen Schnitts oder einer Penetration erzeugt. Vorzugweise weist die am vorderen Ende des ersten Stifts ausgebildete Schneidspitze die Gestalt eines Kegels auf, dessen Mantelfläche sich auf einen einzigen Punkt hin linear verjüngt. Darüber hinaus verfügt die erfindungsgemäße Vorrichtung über einen zweiten Stift zur Aufnahme des von dem ersten Stift mit einer Durchdringung versehenen Dichtungselements. Um die unter Verwendung der Schneidspitzes des ersten Stiftes in dem elastischen Dichtungselement erzeugte Durchdringung in der unter Bezugnahme auf das erfindungsgemäße Verfahren beschriebenen Art und Weise aufweiten zu können, weist der Außenumfang des zweiten Stifts zumindest bereichsweise einen Außenumfang auf, der größer ist als der Außenumfang des ersten Stifts. Auf diese Weise wird dann, wenn das elastische Dichtungselement von dem ersten Stift auf den zweiten Stift geschoben wird, die sich durch das elastische Dichtungselement hindurch erstreckende Durchdringung aufgeweitet, um anschließend in diese so aufgeweitete Durchdringung in der gewünschten Weise einen elektrischen Leiter einführen zu können.

Zur Prozessoptimierung ist es gemäß einer weiteren Ausführungsform vorgesehen, dass der zweite Stift in unmittelbarer Verlängerung der Schneidspitze des ersten Stifts positioniert und entlang der Achse des ersten Stifts ausgerichtet ist. Es wird somit keine Transfereinrichtung benötigt, um das von dem ersten Stift mit einer Durchdringung versehene Dichtungselement zu dem zweiten Stift zu transportieren; vielmehr kann das Dichtungselement direkt von dem ersten Stift auf den zweiten Stift abgestreift bzw. geschoben werden, wenn der zweite Stift in der Verlängerung der Schneidspitze des ersten Stifts positioniert und entlang dessen Achse ausgerichtet ist.

Um diesen Abstreifvorgang durchzuführen, kann der erste Stift beispielsweise von einem Hohlzylinder umgeben sein, der ebenfalls zur Ausführung einer Hubbewegung veranlasst werden kann, so dass der erste Stift und der Hohlzylinder zur Ausführung einer Relativbewegung zueinander verschieblich sind. Wenn beispielsweise das elastische Dichtungselement von dem ersten Stift durchdrungen wurde, so dass die Schneidspitze des ersten Stifts unmittelbar angrenzend am Ende des zweiten Stifts zu liegen kommt, kann dann beispielsweise der Hohlzylinder, der den ersten Stift umgibt, seinerseits zur Ausführung einer Hubbewegung veranlasst werden, infolge derer die Stirnseite des Hohlzylinders mit dem elastischen Dichturigselement auf dem ersten Stift in Anlage gelangt, so dass das Dichtungselement infolge der fortschreitenden Bewegung des Hohlzylinders von dem ersten Stift auf den zweiten Stift geschoben wird.

Gemäß einer bevorzugten Ausführungsform ist es dabei vorgesehen, dass die Stirnseite des Hohlzylinders zumindest bis über die Schneidspitze des ersten Stifts und vorzugsweise bis über das der Schneidspitze des ersten Stifts benachbarte Ende des zweiten Stifts hinaus verschiebbar ist, so dass keine zusätzliche Transfereinrichtung benötigt wird, um das elastische Dichtungselement von dem ersten Stift auf den zweiten Stift schieben zu können.

Nachdem auf diese Weise die unter Verwendung des ersten Stifts in dem elastischen Dichtungselement erzeugte Durchdringung aufgeweitet wurde, kann anschließend das elastische Dichtungselement in der bereits zuvor erläuterten Art und Weise auf eine Hohlnadel aufgeschoben werden, deren Außenumfang im Wesentlichen dem Außenumfang des zweiten Stifts entspricht. Durch diese Hohlnadel kann dann ein elektrischer Leiter in das Dichtungselement eingeführt werden, wie dies bereits zuvor bei der Erläuterung des erfindungsgemäßen Verfahrens beschrieben wurde.

Gemäß einer anderen Ausführungsform ist es vorgesehen, dass der den ersten Stift umgebende Hohlzylinder seinerseits als Hohlnadel ausgebildet ist, die auf den ersten Stift in Richtung dessen Schneidspitze aufschiebbar ist, wie dies bereits zuvor bei der Beschreibung des erfindungsgemäßen Verfahrens erläutert wurde, bei dem die Stechnadel insofern dem ersten Stift der erfindungsgemäßen Vorrichtung entspricht.

Gemäß noch einem weiteren Aspekt wird die der Erfindung zugrunde liegende Aufgabe durch die Verwendung der zuvor beschriebenen Vorrichtung bei der Montage eines elastischen Dichtungselements auf einem elektrischen Leiter gelöst. Wenn die erfindungsgemäße Vorrichtung bei der Montage eines elektrischen Dichtungselements auf einem elektrischen Leiter verwendet wird, dient der erste Stift dazu, um in dem elastischen Dichtungselement eine Durchdringung in Form eines räumlichen Schnitts bzw. einer Penetration zu erzeugen. Hierzu wird ein elastisches Dichtungselement in Hubrichtung des ersten Stifts vor dessen Schneidspitze positioniert, so dass infolge der Hubbewegung des ersten Stifts eine Durchdringung in dem elastischen Dichtungselement mit der Schneidspitze des ersten Stifts erzeugt wird, die dann infolge der Aufnahme des Dichtungselements von dem zweiten Stift aufgeweitet wird.

Erfindungsgemäß wird somit erstmals ein mit einer Schneidspitze in Form eines Kegels ausgebildeter Stift zur Herstellung einer Durchdringung in einem elastischen Dichtungselement verwendet, die dann aufgeweitet wird, um einen elektrischen Leiter einführen zu können.

Im Folgenden wird die Erfindung nun rein exemplarisch unter Bezugnahme auf die beigefügten Zeichnungen beschrieben, wobei:
- Fig. 1: eine perspektivische Ansicht eines elastischen Dichtungselements ist;
- Fig. 2 bis 7: den Verfahrensablauf einer beispielhaften Ausführungsform eines Verfahrens zum Ummanteln eines elektrischen Leiters mit einem elastischen Dichtungselements unter Verwendung einer erfindungsgemäßen Vorrichtung veranschaulichen;
- Fig. 8: eine perspektivische Darstellung einer auf eine Stechnadel aufgeschobenen Hohlnadel zeigt;
- Fig. 9: eine Maschine zum Ummanteln eines elektrischen Leiters mit einem elastischen Dichtungselement zeigt;
- Fig. 10: eine erfindungsgemäße Durchdringungsvorrichtung zeigt, welche bei dem erfindungsgemäßen Verfahren Verwendung finden kann;
- Fig. 11: den zweiten Stift der erfindungsgemäßen Durchdringungsvorrichtung zeigt; und
- Fig. 12: in einer Bildsequenz die Verwendung der erfindungsgemäßen Durchdringungsvorrichtung zum Erzeugen einer Durchdringung in einem elastischen Dichtungselement zeigt.

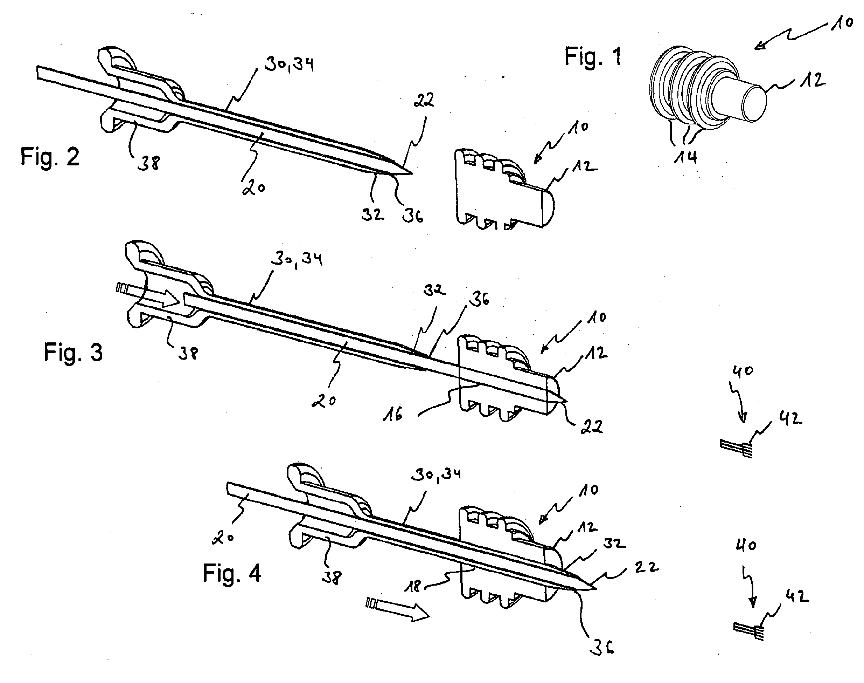

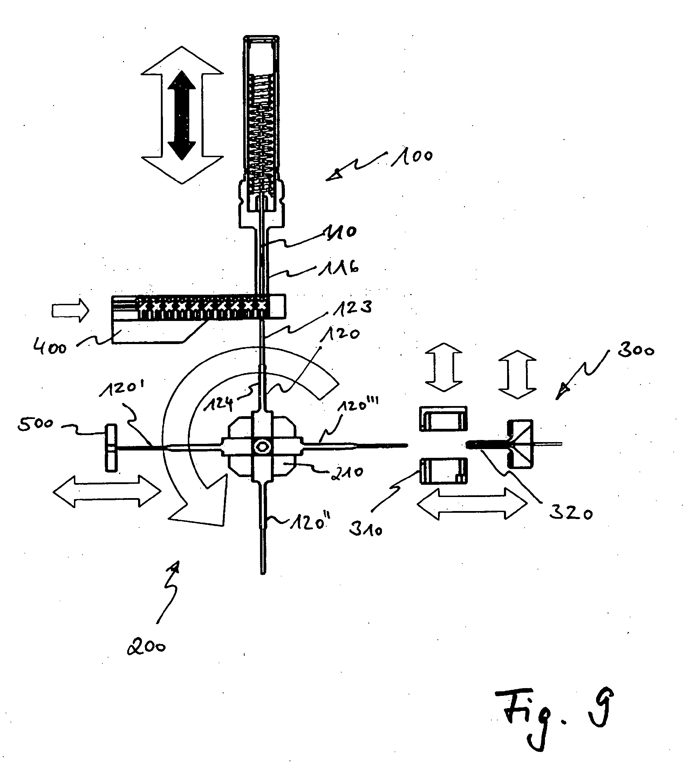

Zunächst wird unter Bezugnahme auf die Fig. 1 bis 8 das erfindungsgemäße Verfahren allgemeingültig erläutert, bevor anschließend unter Bezugnahme auf die Fig. 9 bis 12 eine beispielhafte Vorrichtung beschrieben wird, unter Verwendung derer das erfindungsgemäße Verfahren durchführbar ist.

Die Fig. 1 zeigt ein elastisches Dichtungselement 10 in perspektivischer Darstellung, welches beispielsweise mit Hilfe eines Spritzgießverfahrens als Vollkörper aus beispielsweise einem Silikonmaterial hergestellt wurde. Das Dichtungselement 10 weist dabei einen im Wesentlichen zylindrischen Hauptkörper 12 auf, welcher in axialer Richtung von drei zueinander beabstandeten Dichtringen 14, welche einstückig mit dem Hauptkörper 12 ausgebildet sind, umgeben ist.

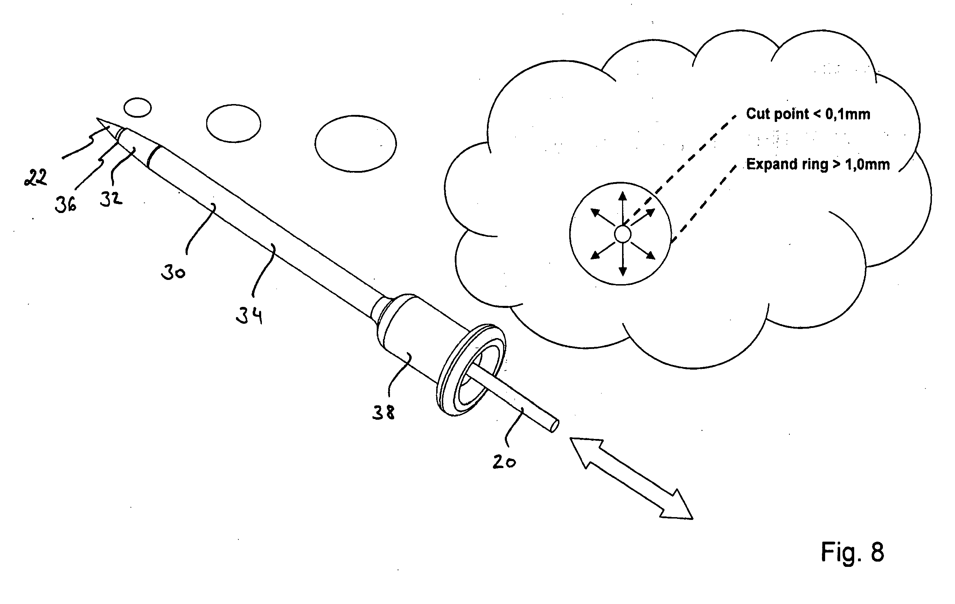

Die Fig. 2 zeigt den Ausgangszustand des erfindungsgemäßen Verfahrens, bevor die Stechnadel 20 und die Hohlnadel 30 in axialer Richtung in den Hauptkörper 12 des Dichtungselements 10 eingestochen und durch diesen hindurch geschoben werden. Wie der Schnittdarstellung der Fig. 2 entnommen werden kann, in der die Hohlnadel 30 auf die Stechnadel 20 aufgeschoben worden ist, weist die Hohlnadel 30 eine kegelstumpfförmige Spitze 32 auf, welche sich vom Nadelschaft 34, dessen Durchmesser dem in dem Dichtungselement 10 herzustellenden zweiten Äquivalentdurchmesser in der Größenordnung von etwa 1 mm entspricht (siehe Fig. 8: "Expand ring"), zu ihrer Nadelspitze am Stirnende 36 der Spitze 32 bis auf einen dem in dem Dichtungselement 10 herzustellenden ersten Äquivalentdurchmesser in der Größenordnung von etwa 0,1 mm verjüngt (siehe Fig. 8: "Cut point").

In den Darstellungen der Fig. 2 und 8 kann erkannt werden, dass sich die Spitze 32 der Hohlnadel 30 kontinuierlich in der Spitze 22 der in der Hohlnadel 30 verschieblich angeordneten Stechnadel 20 fortsetzt, was bedeutet, dass der Außendurchmesser der Stechnadel 20 im Wesentlichen dem Innendurchmesser der Hohlnadel 30 bzw. dem Durchmesser der Hohlnadel 30 an ihrem Stirnende 36 entspricht. An ihrem ihrer kegelstumpfförmigen Spitze 32 gegenüberliegenden Ende weist die Hohlnadel 30 einen Einführtrichter 38 auf, welcher dazu dient, das Einführen der Stechnadel 20 in die Hohlnadel 30 und gegebenenfalls auch das Einführen eines elektrischen Leiters in die Hohnadel 30 zu erleichtern.

Im Folgenden wird nun im Wesentlichen unter Bezugnahme auf die Fig. 3 bis 7 eine Ausführungsform des erfindungsgemäßen Verfahrens erläutert. Nachdem die beiden gemäß Fig. 2 ineinander geschobenen Nadeln 20, 30 in der dargestellten Art und Weise axial versetzt zu dem Dichtungselement angeordnet wurden, wird in einem ersten Schritt damit begonnen, in dem Dichtungselement 10 eine Durchdringung mit einem ersten Äquivalentdurchmesser zu erzeugen, indem die Stechnadel 20 mit ihrer Spitze 22 voraus in den Hauptkörper 22 des Dichtungselements 10 gestochen und durch diesen hindurch geschoben wird, wie dies aus dem Übergang von der Fig. 2 zur Fig. 3 erkennbar wird (siehe auch Fig. 8: "Cut point").

Nachdem auf diese Weise in dem Dichtungselement 12 eine Durchdringung 16 ersten Äquivalentdurchmessers erzeugt wurde, wird dann in einem weiteren Schritt die Durchdringung 16 ersten Äquivalentdurchmessers auf einen zweiten Äquivalentdurchmesser aufgeweitet (siehe Fig. 8: "Expand ring"), indem die Hohlnadel 30 mit ihrer Spitze 32 voraus auf der Stechnadel 20 durch den Hauptkörper 12 des Dichtungselements 10 hindurch geschoben und somit durch die zuvor erzeugte Durchdringung 16 ersten Äquivalentdurchmessers hindurch geschoben wird, wie dies anschaulich in der Fig. 4 dargestellt ist.

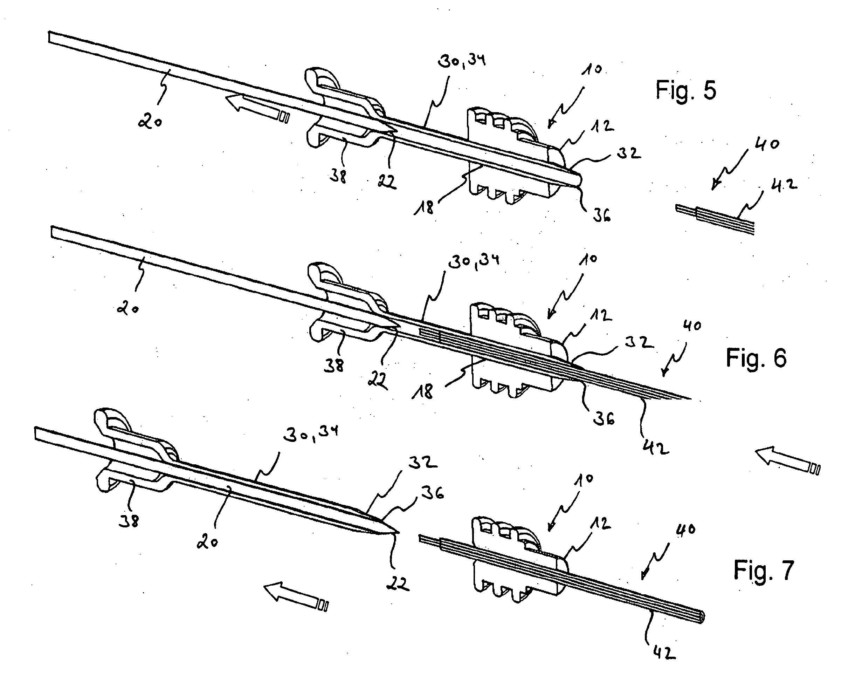

Nachdem auf diese Weise in dem Hauptkörper 12 des Dichtungselements 10 eine Durchdringung 18 zweiten Äquivalentdurchmessers von etwa 1 mm erzeugt wurde, wird dann die Stechnadel 20 gemäß Fig. 5 wieder zurück gezogen, um im Inneren der Hohlnadel 30 Platz zur Aufnahme eines mit einer Isolierung 42 umgebenen elektrischen Leiters 40 zu schaffen, welcher sich in der Fig. 5 in axialer Beabstandung zur Spitze 32 der noch in dem Dichtungselement 10 befindlichen Hohlnadel 30 befindet und einen Außendurchmesser von etwa 0,8 mm aufweist.

In einem weiteren Verfahrensschritt kann somit nun der elektrische Leiter 40 in die auf den zweiten Äquivalentdurchmesser aufgeweitete Durchdringung 18 bzw. in das Innere der Hohlnadel 30 eingeführt werden. Alternativ zu der in den Figuren dargestellten Ausführungsform kann jedoch der elektrische Leiter 42 auch gleichzeitig mit dem Zurückziehen der Stechnadel 20 aus der Hohlnadel 30 in das Innere derselben eingeführt werden. Hierzu könnte beispielsweise das vordere Ende des elektrischen Leiters 40 an der Spitze 22 der Stechnadel 20 oder an dem der Spitze 22 der Stechnadel 20 gegenüberliegenden Ende der Stechnadel 20 befestigt werden, um den elektrischen Leiter 40 mit Hilfe der Stechnadel 20 in das Innere der Hohlnadel 30 einzuziehen, indem die Stechnadel 20 aus der Hohlnadel 30 gezogen wird.

Nachdem der elektrische Leiter 40 auf eine der zuvor erläuterten Arten in das Innere der Hohlnadel 30 eingebracht wurde, wird dann die Hohlnadel 30 aus dem Dichtungselement 10 herausgezogen, so dass allein der elektrische Leiter 40 in dem Dichtungselement 10 verbleibt, wie dies in der Fig. 7 dargestellt ist. Durch das Herausziehen der Hohlnadel 30 aus dem Dichtungselement 10 wird dabei bewirkt bzw. zugelassen, dass sich das Dichtungselement 10 als Ganzes bzw. die zuvor auf den zweiten Äquivalentdurchmesser aufgeweitete Durchdringung 18 auf annähernd ihren ersten Äquivalentdurchmesser in der Größenordnung von 0,1 mm zusammenziehen kann, so dass nicht nur ein dichter Abschluss zwischen dem elektrischen Leiter 40 und dem Dichtungselement 10 sondern auch eine reibschlüssige Verbindung zwischen dem elektrischen Leiter 40 und dem Dichtungselement 10 sichergestellt werden kann, durch die das Dichtungselement 10 sicher auf dem elektrischen Leiter 40 gehalten wird.

Sofern in der voranstehenden Beschreibung davon die Rede ist, dass ein Element aus dem anderen Element herausgezogen wird, so bedeutet dies, dass das eine Element vollständig aus dem anderen Element entfernt wird, wie dies auf die Hohlnadel 30 zutrifft, welche gemäß Fig. 7 vollständig aus dem Dichtungselement 10 herausgezogen wird.

Demgegenüber bedeutet die Formulierung, der zufolge ein Element aus dem anderen Element gezogen wird, nicht zwangsweise, dass das eine Element vollständig aus dem anderen Element herausgezogen wird, wie dies auf die Stechnadel 20 zutrifft, welche gemäß der Fig. 5 lediglich teilweise aus der Hohlnadel 30 gezogen wurde.

Im Folgenden wird nun unter Bezugnahme auf die Fig. 9 bis 11 eine beispielhafte Ausführungsform einer erfindungsgemäßen Durchdringungsvorrichtung 100 beschrieben, welche bei der Durchführung des erfindungsgemäßen Verfahrens verwendet werden kann.

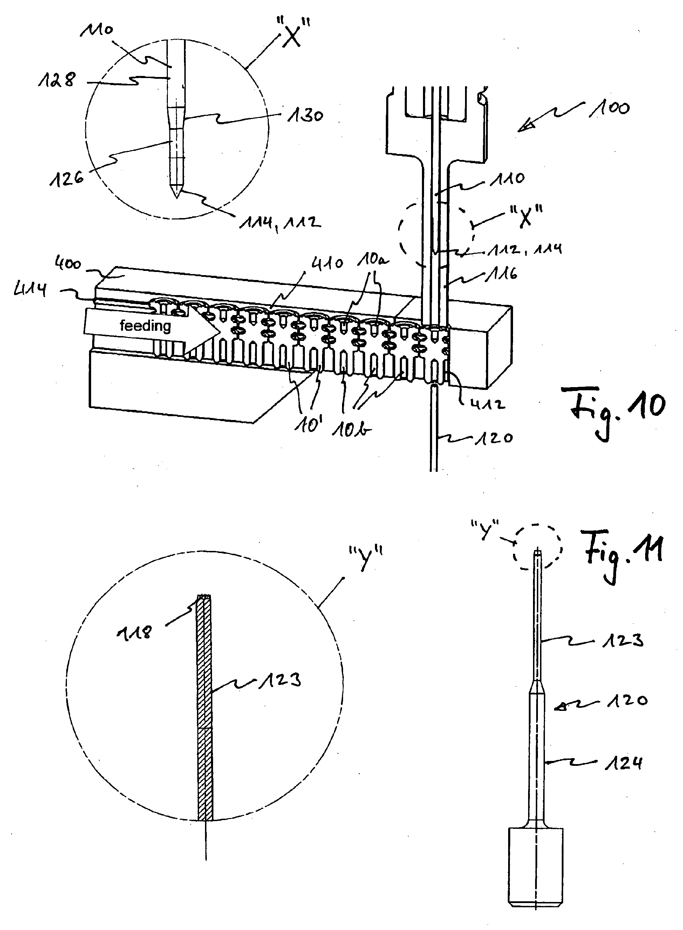

Die in der Fig. 9 dargestellte Maschine besteht im Wesentlichen aus einer erfindungsgemäßen Durchdringungsvorrichtung 100, einer Transfervorrichtung 200 sowie einer Kabelmontagevorrichtung 300. Die erfindungsgemäße Durchdringungsvorrichtung 100 ist in der Fig. 10 in vergrößerter Darstellung gezeigt. Wie der Fig. 10 in Verbindung mit der Fig. 9 entnommen werden kann, besteht die erfindungsgemäße Durchdringungsvorrichtung 100 im Wesentlichen aus einem ersten Stift 110, an dessen vorderen Ende eine Schneidspitze 112 in Form eines auf einen Punkt sich linear verjüngenden Kegels 114 ausgebildet ist (siehe Detail "X"). An die kegelförmige Spitze 112 schließt sich ein erster Schaftabschnitt 126 an, dessen Durchmesser dem Durchmesser der Grundfläche des Kegels 114 entspricht. Dieser erste Schaftabschnitt 126 weitet sich über einen Konusabschnitt 130 auf, um sich in einem zweiten Schaftabschnitt 128 fortzusetzen.

Der erste Stift 110 ist dabei von einem Hohlzylinder 116 umgeben, dessen Innendurchmesser im Wesentlichen dem Außendurchmesser des zweiten Schaftabschnitts 128 des ersten Stifts 110 entspricht. Die Ausbildung des ersten Stifts 110 mit zwei unterschiedlich dicken Schaftabschnitten 126, 128 erweist sich dabei dahingehend als vorteilhaft, dass hierdurch im Falle, dass mit der Vorrichtung 110 Durchdringungen unterschiedlicher Durchmesser erzeugt werden sollen, nur der erste Stift 110 nicht jedoch der als Führung für den ersten Stift 110 dienende Hohlzylinder 116 auszutauschen ist. Um Durchdringungen unterschiedlicher Durchmesser erzeugen zu können, reicht es nämlich aus, nur den Durchmesser des ersten Schaftabschnitts 126 zu variieren, da nur dieser durch das zu bearbeitende Dichtungselement hindurch dringt, wohingegen der zweite Schaftabschnitt 128 eine reine Führungsfunktion besitzt.

Der erste Stift 110 und der Hohlzylinder 116 sind jeweils mit einem nicht dargestellten Antrieb verbunden, die so gesteuert werden können, dass der erste Stift 110 und der Hohlzylinder 116 unabhängig voneinander eine Hubbewegung ausführen können, was bedeutet, dass zwischen dem Hohlzylinder 116 und dem ersten Stift 110 eine Relativbewegung auftritt, wie dies in der Fig. 9 durch die beiden ineinander geschachtelten Doppelpfeile angedeutet ist. Hierbei veranschaulicht der größere, äußere Pfeil die Hubbewegung des Hohlzylinders 116 wohingegen der kleinere, innere Pfeil die Hubbewegung des ersten Stifts 110 veranschaulicht.

Zusätzlich weist die erfindungsgemäße Durchdringungsvorrichtung 100 einen zweiten Stift 120 auf, welcher in der in der Fig. 9 dargestellten Ausführungsform gleichzeitig Bestandteil der Transfervorrichtung 200 ist, welche vier solche zweite Stifte 120, 120', 120", 120'" umfasst, die unter jeweils einem rechten Winkel zueinander an einem Drehkreuz 210 der Transfervorrichtung 200 angeordnet sind. Der zweite Stift 120 ist in der Verlängerung der Schneidspitze 112 des ersten Stifts 110 positioniert und ist entlang der Achse des ersten Stifts 110 ausgerichtet.

Zur Versorgung der erfindungsgemäßen Durchdringungsvorrichtung 100 mit Dichtungselementen 10' ist eine Transporteinrichtung 400 mit einem Transportkanal 410 vorgesehen, der in einem Kanal 412 endet, welcher sich durch die Transporteinrichtung 400 in Richtung der beiden Stifte 110, 120 hindurch erstreckt. In dem Transportkanal 410 ist eine Vielzahl von Dichtungselementen 10' aufgenommen, welche durch Vibration dem Kanal 412 zugeführt werden. An den Seitenwänden des Transportkanals 410 sind mehrere Führungsrippen 414 ausgebildet, welche in die Zwischenräume zwischen den Dichtungsringen 14 der Dichtungselemente 10' eingreifen, so dass diese nicht schwerkraftbedingt aus dem Kanal 412 nach unten heraus fallen.

Die in der Fig. 10 dargestellten Dichtungselemente 10' entsprechen im Wesentlichen dem unter Bezugnahme auf die Fig. 1 beschriebenen Dichtungselement 10, unterscheiden sich jedoch von diesem dadurch, dass in den Dichtungselementen 10' bzw. in deren zylindrischen Hauptkörper 12 zwei Sacklochöffnungen 10a bzw. 10b ausgebildet sind, die sich ausgehend von den sich gegenüberliegenden Endflächen des Dichtungselements 10' in axialer Richtung in dasselbe hinein erstrecken. Zwischen diesen Sacklochöffnungen 10a und 10b ist das Dichtungselement 10' als Vollkörper ausgebildet, um die erforderliche Klemmkraft aufbringen zu können, welche erforderlich ist, um einen dichten Abschluss gegenüber einem elektrischen Leiter mit sehr kleinem Durchmesser gewährleisten zu können.

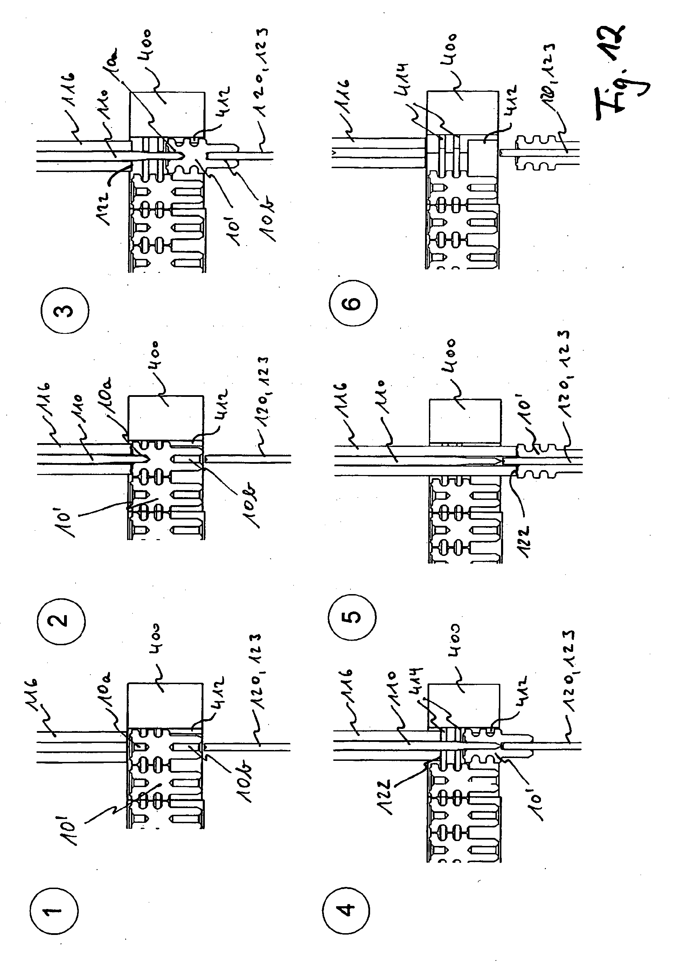

Im Folgenden wird nun die Verwendung der erfindungsgemäßen Durchdringungsvorrichtung 100 bei der Montage eines elastischen Dichtungselements 10' auf einem elektrischen Leiter im Wesentlichen unter Bezugnahme auf die Bildsequenz der Fig. 12 erläutert.

Wie dem Übergang von Bild 1 zu Bild 2 der Fig. 12 entnommen werden kann, wird zunächst der erste Stift 110 mit seiner Schneidspitze 112 voraus durch den Hohlzylinder 116 geschoben, bis die Schneidspitze 112 auf dem Boden der oberen Sacklochöffnung 10a auftritt. Bei fortschreitender Vorschubbewegung des ersten Stifts 110 wird dann das elastische Dichtungselement 10' von dem ersten Stift 110 aus dem Kanal 412 herausgedrückt, wobei die Dichtungsringe 14 durch die Rippen 414 in dem Transportkanal 410 elastisch deformiert werden. Da der zweite Stift 120 axial mit dem ersten Stift 110 ausgerichtet ist, greift bei fortschreitender Vorschubbewegung des ersten Stifts 110 der zweite Stift 120 von unten in die andere Sacklochöffnung 10b des Dichtungselements 10' ein, bis das dem ersten Stift 110 benachbarte Ende 116 des zweiten Stifts 120 in Anlage mit dem Boden der unteren Sacklochöffnung 10b gelangt (siehe Bild 3 der Fig. 12). Somit kann sich das Dichtungselement 10' bei dem nachfolgenden Durchstechen unter Verwendung des ersten Stifts 110 nicht verkanten.

Bei noch weiter fortschreitender Vorschubbewegung des ersten Stifts 110 durchdringt dieser dann mit seinem ersten Schaftabschnitt 126 in der gewünschten Weise das Dichtungselement 10' (siehe Bild 4 der Fig. 12), indem mit der kegelförmigen Schneidspitze 112 in dem Dichtungselement 10' eine Durchdringung in Form eines räumlichen Schnitts erzeugt wird. Hierbei dienen die beiden Sacklochöffnungen 10a, 10b gewissermaßen als Führungen, um einem unerwünschten Verkanten des Dichtungselement 10' entgegenzuwirken, wenn dieses von dem ersten Stift 110 durchstochen wird. Damit im Falle, dass die Schneidspitze 112 auf das benachbarte Ende des Seitenstifts 120 in unerwünschter Weise auftreffen sollte, die Schärfe der Schneidspitze 112 nicht verloren geht, ist in dem dem ersten Stift 110 benachbarten Ende des zweiten Stifts 120 eine kraterförmige Ausnehmung 118 (siehe Detail "Y" der Fig. 11) ausgebildet, in die die Schneidspitze 112 unbeschädigt eintauchen kann.

Nachdem auf diese Weise in dem Dichtungselement 10' in der gewünschten Weise eine Durchdringung erzeugt wurde, wird dann der Hohlzylinder 116 gemäß dem Übergang von dem Bild 4 zum Bild 5 der Fig. 12 nach unten verschoben, so dass dessen Stirnende 122 mit dem Dichtungselement 10' in Anlage gelangt und dieses bei fortschreitender Vorschubbewegung des Hohlzylinders 116 vollständig auf den zweiten Stift 120 aufschiebt. Danach können dann der erste Stift 110 und der Hohlzylinder 116 wieder zurückgezogen werden, um anschließend das nächste Dichtungselement 10' mit einer Durchdringung versehen zu können (siehe Fig. 12).

Nachdem in der zuvor beschriebenen Art und Weise das Dichtungselement 10' unter Verwendung der erfindungsgemäßen Durchdringungsvorrichtung 100 auf den zweiten Stift 120 aufgeschoben wurde, kann dann das Dichtungselement 10' unter Verwendung einer Schiebeplatte 500 gemäß Fig. 9 auf den verdickten Abschnitt 124 des zweiten Stifts 120 aufgeschoben werden, indem diese Schiebeplatte 500 über den ersten Stift 120 nach rechts verschoben wird. Hierzu muss zuvor der zweite Stift 120 unter Verwendung der Transfervorrichtung 200 gemäß dem Drehpfeil um 90° gedreht werden, so dass die Schiebeplatte 500 auf den zweiten Stift 120 aufgeschoben werden kann, wie dies durch den Doppelpfeil der Fig. 9 angedeutet ist.

Nachdem auf diese Weise das Dichtungselement 10' auf den verdickten Abschnitt 124 aufgeschoben und somit aufgeweitet wurde, kann dann die Transfervorrichtung 200 um weitere 180° gedreht werden, um dann unter Verwendung der Kabelmontagevorrichtung 300 das aufgeweitete Dichtungselement 10' auf den dargestellten elektrischen Leiter 40 montieren zu können.

Diese Kabelmontageeinrichtung 300 besteht im Wesentlichen aus einer zweiteiligen Abstreifervorrichtung 310 und einer ebenfalls zweiteiligen Hohlnadel 320, welche beide unabhängig voneinander verschoben werden können, wie dies in der Fig. 9 durch den jeweiligen horizontalen Doppelpfeil angedeutet ist. Ebenfalls können die Hälften, aus denen die beiden Vorrichtungen 310, 320 bestehen, auseinander gefahren werden, wie dies in der Fig. 9 durch die vertikal ausgerichteten Doppelpfeile angedeutet ist.

Die Abstreifervorrichtung 310 dient dabei dazu, um das aufgeweitete Dichtungselement 10' auf die Hohlnadel 320 aufzuschieben, welche zuvor auf den nicht verdickten Abschnitt 123 des zweiten Stifts 120 aufgeschoben wurde und deren Außenumfang im Wesentlichen dem Außenumfang des verdickten Abschnitts 124 des zweiten Stifts 120 entspricht. Anschließend werden dann die Abstreifervorrichtung 310 und die Hohlnadel 320 gemeinsam nach rechts verfahren, wodurch der elektrische Leiter 40 in das Innere der Hohlnadel 320 eingeführt wird. Bei anhaltender Verschiebung der Hohlnadel 320 nach rechts hält dann die zum Stillstand gekommene Abstreifervorrichtung 310 das von ihr aufgenommene Dichtungselement 10' an Ort und Stelle fest, so dass durch das Herausziehen der Hohlnadel 310 aus der Abstreifervorrichtung 310 in der gewünschten Weise das Kontrahieren des aufgeweiteten Dichtungselements 10' bewirkt wird, um so eine zuverlässige Abdichtung des elektrischen Leiters 40 gegenüber dem elastischen Dichtungselement 10' zu gewährleisten.

Obwohl in der zuvor unter Bezugnahme auf die Fig. 9 beschriebenen Ausführungsform die Transfervorrichtung 200 mit vier senkrecht zueinander angeordneten zweiten Stiften 120, 120', 120", 120'" zum Einsatz kommt, um das mit einer Durchdringung versehene Dichtungselement 10' an die Hohlnadel 320 zu übergeben, sei der Vollständigkeit halber an dieser Stelle darauf hingewiesen, dass es gemäß einer weiteren Ausführungsform vorgesehen ist, die Hohlnadel 320 direkt in der Verlängerung der Schneidspitze 112 des ersten Stifts 110 zu positionieren und entlang dessen Achse auszurichten, wie dies auf den zweiten Stift 120 zutrifft, wodurch auf die Transfervorrichtung 200 verzichtet werden kann. In diesem Falle entspricht die Hohlnadel 320 in ihrer Funktion dem zweiten Stift 120, da der Außenumfang der Hohlnadel 320 im Wesentlichen dem verdickten Abschnitt 124 des zweiten Stifts 120 entspricht.

Ebenfalls wäre es möglich, auf die Schiebeplatte 500 zu verzichten, wenn der Hohlzylinder 116 bis über den verdickten Abschnitt 124 des zweiten Stifts 120 verschiebbar wäre, wie dies gemäß einer weiteren Ausführungsform vorgesehen ist.

### Bezugszeichenliste

- 10, 10': Dichtungselement
- 10a, 10b: Sacklochöffnung
- 12: Hauptkörper von 10
- 14: Dichtungsringe um 12
- 16: Durchdringung ersten Äquivalentdurchmessers
- 18: Durchdringung zweiten Äquivalentdurchmessers

- 20: Stechnadel, Durchmesser bspw. ca. 0,1 mm
- 22: Spitze von 20

- 30: Hohlnadel
- 32: Spitze von 30
- 34: Nadelschaft von 30, Durchmesser bspw. ca. 1 mm
- 36: Stirnende von 32, Durchmesser bspw. ca. 0,1 mm
- 38: Einführtrichter

- 40: elektrischer Leiter
- 42: Isolierung von 40, Außendurchmesser bspw. ca. 0,8 mm

- 100: Durchdringungsvorrichtung
- 110: erster Stift
- 112: Schneidspitze
- 114: Kegel
- 116: Hohlzylinder
- 118: kraterförmige Ausnehmung
- 120: zweiter Stift
- 120': zweiter Stift
- 120": zweiter Stift
- 120'": zweiter Stift
- 122: Stirnende von 116
- 123: nicht verdickter Abschnitt von 120
- 124: verdickter Abschnitt von 120
- 126: erster Schaftabschnitt von 110
- 128: zweiter Schaftabschnitt von 110
- 130: Konusabschnitt zwischen 126 und 128

- 200: Transfervorrichtung
- 210: Drehkreuz

- 300: Kabelmontagevorrichtung
- 310: Abstreifervorrichtung
- 320: Hohlnadel

- 400: Transporteinrichtung
- 410: Transportkanal
- 412: Kanal, senkrecht zu 410
- 414: Führungsrippen

- 500: Schiebeplatte

## Patentansprüche

1. Vorrichtung (100) zur Verwendung bei der Montage eines elastischen Dichtungselements (10') auf einem elektrischen Leiter (40) mit einer Einrichtung zur Durchdringung und zur Aufweitung der Durchdringung in dem elastischen Dichtungselement (10'),
**gekennzeichnet durch**:
- einen eine Hubbewegung ausführenden ersten Stift (110), an dessen vorderen Ende eine Schneidspitze (112) ausgebildet ist, die beim Hindurchdringen **durch** ein in Hubrichtung vor der Schneidspitze (112) positioniertes, als Vollkörper ausgebildetes Dichtungselement (10') in demselben eine Durchdringung erzeugt; und
- einen zweiten Stift (120) zur Aufnahme des von dem ersten Stift (110) mit einer Durchdringung versehnen Dichtungselements (10');
wobei der Außenumfang des zweiten Stifts (120) zur Aufweitung der erzeugten Durchdringung in dem elastischen Dichtungselement (10') zumindest bereichsweise größer ist als der Außenumfang des ersten Stifts (110).

2. Vorrichtung nach Anspruch 1,
**dadurch gekennzeichnet, dass**
die Schneidspitze (112) des ersten Stifts (110) durch einen Kegel (114) gebildet ist, der am vorderen Ende des ersten Stifts (110) ausgebildet ist.

3. Vorrichtung nach Anspruch 2,
**dadurch gekennzeichnet, dass**
sich der Kegel (114) in einem ersten Schaftabschnitt (126) ersten Durchmessers fortsetzt, der sich seinerseits über einen Konusabschnitt (130) hinweg aufweitet, um sich in einem zweiten Schaftabschnitt (128) zweiten Durchmessers fortzusetzen.

4. Vorrichtung nach zumindest einem der vorstehenden Ansprüche,
**dadurch gekennzeichnet, dass**
der zweite Stift (120) in der Verlängerung der Schneidspitze (112) des ersten Stifts (110) positioniert und entlang dessen Achse ausgerichtet ist.

5. Vorrichtung nach zumindest einem der vorstehenden Ansprüche,
**dadurch gekennzeichnet, dass**
der erste Stift (110) von einem Hohlzylinder (116) umgeben ist, wobei der erste Stift (110) und der Hohlzylinder (116) zur Ausführung einer Relativbewegung zueinander verschieblich sind.

6. Vorrichtung nach Anspruch 4 und 5,
**dadurch gekennzeichnet, dass**
die Stirnseite (122) des Hohlzylinders (116) zumindest bis über die Schneidspitze (112) des ersten Stifts (110) und vorzugsweise bis über das der Schneidspitze (112) des ersten Stifts (110) benachbarte Ende des zweiten Stifts (120) hinaus verschiebbar ist.

7. Vorrichtung nach Anspruch 1 oder 2,
**dadurch gekennzeichnet, dass**
der zweite Stift (120) eine Hohlnadel (30) ist, die auf den ersten Stift (110) in Richtung dessen Schneidspitze (112) aufschiebbar ist.

8. Verwendung einer Vorrichtung (100) nach zumindest einem der vorstehenden Ansprüche bei der Montage eines elastischen Dichtungselements (10') auf einem elektrischen Leiter (40), wobei bei der erfindungsgemäßen Verwendung der Vorrichtung (100)
- in Hubrichtung des ersten Stifts (110) vor dessen Schneidspitze (112) ein als Vollkörper ausgebildetes elastisches Dichtungselement (10') positioniert wird;
- infolge der Hubbewegung des ersten Stifts (110) eine Durchdringung in dem elastischen Dichtungselement (10') mit der Schneidspitze (112) des ersten Stifts (110) erzeugt wird; und
- die erzeugte Durchdringung infolge einer Aufnahme des Dichtungselements (10') von dem zweiten Stift (120) aufgeweitet wird.

9. Verfahren zum Ummanteln eines elektrischen Leiters (40) mit einem elastischen Dichtungselement (10), mit den Schritten:
- Erzeugen einer Durchdringung (16) in dem Dichtungselement (10), indem das Dichtungselement (10) mit einer Stechnadel (20) durchstoßen wird;
**gekennzeichnet durch**
- Aufweiten der erzeugten Durchdringung (16);
- Einführen des elektrischen Leiters (40) in die aufgeweitete Durchdringung (18); und
- Erwirken eines Kontrahierens der aufgeweiteten Durchdringung (18) zur Abdichtung des elektrischen Leiters (40) gegenüber dem elastischen Dichtungselement (10).

10. Verfahren nach Anspruch 9,
**dadurch gekennzeichnet,**
**dass** die Durchdringung (16) aufgeweitet wird, indem eine Hohlnadel (30) durch die Durchdringung (16) hindurchgeführt wird.

11. Verfahren nach Anspruch 9 oder 10,
**dadurch gekennzeichnet, dass**
das Kontrahieren der aufgeweiteten Durchdringung (18) erwirkt wird, indem die Hohlnadel (30) aus dem Dichtungselement (10) herausgezogen wird.

12. Verfahren nach zumindest einem der Ansprüche 9 bis 11,
**dadurch gekennzeichnet, dass**
der elektrische Leiter (40) in derselben Richtung in die Hohlnadel (30) eingeführt wird, in der die Stechnadel (20) aus der Hohlnadel (30) gezogen wird.

13. Verfahren nach zumindest einem der Ansprüche 9 bis 12,
**dadurch gekennzeichnet, dass**
das Erzeugen der Durchdringung (16) nicht-spanend erfolgt und/oder dass das Aufweiten der erzeugten Durchdringung (16) nicht-spanend erfolgt.

14. Verfahren nach zumindest einem der Ansprüche 9 bis 13,
**dadurch gekennzeichnet, dass**
die Hohlnadel (30) eine kegelstumpfförmige Spitze (32) aufweist.

15. Elastisches Dichtungselement (10') zur Verwendung in Verbindung mit der Vorrichtung nach einem der Ansprüche 1 bis 7, wobei in dem Hauptkörper (12) des elastischen Dichtungselements (10') zwei Sacklochöffnungen (10a, 10b) ausgebildet sind, die sich ausgehend von den sich gegenüberliegenden Endflächen des Dichtungselements (10') in axialer Richtung in dasselbe hinein erstrecken.

## Claims

1. Apparatus (100) for use for mounting an elastic sealing element (10') to an electrical conductor (40) having means for forming a through-opening and for expansion of the through-opening in the elastic sealing element (10'), **characterized by**:
- a first pin (110) for performing a stroke movement, having a cutting tip (112) at its front end, forming a through-opening in a sealing element (10') when piercing through the sealing element (10') positioned in front of the cutting tip (112) in stroke direction and formed as full-body; and
- a second pin (120) for accommodating the sealing element (10') provided with a through-opening from the first pin (110);
wherein the outer circumference of the second pin (120) is at least partially larger than the outer circumference of the first pin (110), for expansion of the through-opening generated in the elastic sealing element (10').

2. Apparatus according to claim 1,
**characterized in that**
the cutting tip (112) of the first pin (110) is formed by a cone (114), which is formed at the front end of the first pin (110).

3. Apparatus according to claim 2,
**characterized in that**
the cone (114) continues in a first shaft portion (126) of a first diameter, which in turn expands across a cone portion (130) to continue in a second shaft portion (128) of a second diameter.

4. Apparatus according to at least one of the preceding claims,
**characterized in that**
the second pin (120) is positioned in extension of the cutting tip (112) of the first pin (110) and oriented along its axis.

5. Apparatus according to at least one of the preceding claims,
**characterized in that**
the first pin (110) is surrounded by a hollow cylinder (116), wherein the first pin (110) and the hollow cylinder (116) are movable for executing a relative movement to each other.

6. Apparatus according to claim 4 and 5,
**characterized in that**
the front end (122) of the hollow cylinder (116) is moveable at least beyond the cutting tip (112) of the first pin (110) and preferably beyond the end of the second pin (120) adjacent to the cutting tip (112) of the first pin (110).

7. Apparatus according to claim 1 or 2,
**characterized in that**
the second pin (120) is a hollow needle (30) which is slidable onto the first pin (110) in the direction of its cutting tip (112).

8. Use of an apparatus (100) according to at least one of the preceding claims for mounting an elastic sealing element (10') to an electrical conductor (40), wherein, when using the apparatus (100) according to the invention,
- an elastic sealing element (10') formed as full-body is positioned in front of the cutting tip (112) of the first pin (110) in its stroke direction;
- resulting from the stroke movement of the first pin (110), a through-opening in the elastic sealing element (10') is formed using the cutting tip (112) of the first pin (110); and
- the generated through-opening is expanded due to an accommodation of the sealing element (10') by the second pin (120).

9. Method for covering an electrical conductor (40) with an elastic sealing element (10), comprising the steps of:
- generating a through-opening (16) in the sealing element (10) by piercing the sealing element (10) with a piercing needle (20);
**characterized by**
- expanding the generated through-opening (16);
- inserting the electrical conductor (40) into the expanded through-opening (18); and
- effecting a contraction of the expanded through-opening (18) for sealing the electrical conductor (40) against the elastic sealing element (10).

10. Method according to claim 9,
**characterized in that**
the through-opening (16) is expanded by inserting a hollow needle (30) through the through-opening (16).

11. Method according to claim 9 or 10,
**characterized in that**
the contraction of the expanded through-opening (18) is effected by withdrawing the hollow needle (30) from the sealing element (10).

12. Method according to at least one of claims 9 to 11,
**characterized in that**
the electrical conductor (40) is inserted into the hollow needle (30) in the same direction in which the piercing needle (20) is withdrawn from the hollow needle (30).

13. Method according to at least one of claims 9 to 12,
**characterized in that**
the generation of the through-opening (16) is carried out in a non-chipping way and/or the expansion of the generated through-opening (16) is carried out in a non-chipping way.

14. Method according to at least one of claims 9 to 13,
**characterized in that**
the hollow needle (30) has a frustoconical tip (32).

15. Elastic sealing element (10') for use in connection with the apparatus according to one of claims 1 to 7, wherein in the main body (12) of the elastic sealing element (10') two blind holes (10a, 10b) are formed which extend in axial direction from the opposite end surfaces of the sealing element (10') into the same.

## Revendications

1. Dispositif (100) à utiliser lors du montage d'un élément d'étanchéité élastique (10') sur un conducteur électrique (40) avec un système pour perforer et pour élargir la perforation dans l'élément d'étanchéité élastique (10'),
**caractérisé par** :
- une première tige (110) exécutant un mouvement de déplacement, à l'extrémité antérieure duquel est réalisée une pointe de coupe (112) qui engendre une perforation dans l'élément d'étanchéité (10') lors d'une opération de perforation à travers un élément d'étanchéité (10') positionné devant la pointe de coupe (112) dans la direction de déplacement et réalisée sous forme de corps plein ; et
- une seconde tige (120) pour recevoir l'élément d'étanchéité (10') doté d'une perforation au moyen de la première tige (110) ;
dans lequel, pour élargir la perforation engendrée dans l'élément d'étanchéité élastique (10'), la circonférence extérieure de la seconde tige (120) est au moins localement plus grande que la circonférence extérieure de la première tige (110).

2. Dispositif selon la revendication 1,
**caractérisé en ce que** la pointe de coupe (112) de la première tige (110) est formée par un cône (114) qui est réalisé à l'extrémité antérieure de la première tige (110).

3. Dispositif selon la revendication 2,
**caractérisé en ce que** le cône (114) se poursuit dans un premier tronçon de fût (126) ayant un premier diamètre, qui s'élargit à son tour au-delà d'un tronçon conique (130), afin de se poursuivre dans un second tronçon de fût (128) ayant un second diamètre.

4. Dispositif selon l'une au moins des revendications précédentes, **caractérisé en ce que** la seconde tige (120) est positionnée dans le prolongement de la pointe de coupe (112) de la première tige (110) et orientée le long de son axe.

5. Dispositif selon l'une au moins des revendications précédentes,
**caractérisé en ce que** la première tige (110) est entourée par un cylindre creux (116), dans lequel la première tige (110) et le cylindre creux (116) sont déplaçables l'un par rapport à l'autre pour exécuter un mouvement relatif.

6. Dispositif selon la revendication 4 et 5,
**caractérisé en ce que** la face frontale (122) du cylindre creux (116) est déplaçable au moins jusqu'au-delà de la pointe de coupe (112) de la première tige (110), et de préférence au-delà de l'extrémité, voisine de la pointe de coupe (112) de la première tige (110), de la seconde tige (120).

7. Dispositif selon la revendication 1 ou 2,
**caractérisé en ce que** la seconde tige (120) est une aiguille creuse (30), qui est susceptible d'être enfilée sur la première tige (110) en direction de sa pointe de coupe (112).

8. Utilisation d'un dispositif (100) selon l'une au moins des revendications précédentes lors du montage d'un élément d'étanchéité élastique (10') sur un conducteur électrique (40), tel que lors de l'utilisation conformément à l'invention du dispositif (100)
- un élément d'étanchéité élastique (10') réalisé sous forme de corps plein est positionnée devant la pointe de coupe (112) de la première tige (110), dans la direction de déplacement de celle-ci ;
- suite au mouvement de déplacement de la première tige (110) on produit une perforation dans l'élément d'étanchéité élastique (10') avec la pointe de coupe (112) de la première tige (110) ; et
- la perforation engendrée est élargie par la seconde tige (120) suite à une réception de l'élément d'étanchéité (10').

9. Procédé pour enrober un conducteur électrique (40) avec un élément d'étanchéité élastique (10), comprenant les étapes consistant à :
- engendrer une perforation (16) dans l'élément d'étanchéité (10), en poinçonnant l'élément d'étanchéité (10) avec une aiguille (20) ;
**caractérisé par** les étapes consistant à
- élargir la perforation engendrée (16) ;
- introduire le conducteur électrique (40) dans la perforation élargie (18) ; et
- provoquer une contraction de la perforation élargie (18) pour étancher le conducteur électrique (40) par rapport à l'élément d'étanchéité élastique (10).

10. Procédé selon la revendication 9,
**caractérisé en ce que** la perforation (16) est élargie en introduisant une aiguille creuse (30) à travers la perforation (16).

11. Procédé selon la revendication 9 ou 10,
**caractérisé en ce que** la contraction de la perforation élargie (18) est provoquée en extrayant l'aiguille creuse (30) hors de l'élément d'étanchéité (10).

12. Procédé selon l'une au moins des revendications 9 à 11,
**caractérisé en ce que** le conducteur électrique (40) est introduit dans l'aiguille creuse (30) dans la même direction dans laquelle l'aiguille (20) est extraite hors de l'aiguille creuse (30).

13. Procédé selon l'une au moins des revendications 9 à 12,
**caractérisé en ce que** la génération de la perforation (16) a lieu sans enlèvement de matière et/ou **en ce que** l'élargissement de la perforation engendrée (16) a lieu sans enlèvement de matière.

14. Procédé selon l'une au moins des revendications 9 à 13,
**caractérisé en ce que** l'aiguille creuse (30) comporte une pointe en forme de tronc de cône (32).

15. Élément d'étanchéité élastique (10') à utiliser en association avec le dispositif selon l'une des revendications 1 à 7, dans lequel deux ouvertures en forme de trous borgnes (10a, 10b) sont réalisées dans le corps principal (12) de l'élément d'étanchéité élastique (10'), lesdites ouvertures s'étendant en direction axiale jusqu'à l'intérieur de l'élément d'étanchéité (10'), en partant des surfaces terminales opposées de celui-ci.
